# EUROPEAN PATENT SPECIFICATION

(11) **EP 2 972 967 B1**
(45) Date of publication and mention of the grant of the patent: **02.05.2018**
(21) Application number: 14716077.4
(22) Date of filing: 06.03.2014
(51) Int. Cl.: G06F 15/78, G06F 13/42, G01R 31/3185

(54) **SINGLE WIRE PROGRAMMING AND DEBUGGING INTERFACE**
EINZELLEITUNGSPROGRAMMIERUNGS- UND FEHLERBESEITIGUNGSSCHNITTSTELLE
INTERFACE DE PROGRAMMATION ET DE DÉBOGAGE UNIFILAIRE

(30) Priority: 14.03.2013 US 201361780995 P; 05.03.2014 US 201414197721
(43) Date of publication of application: 20.01.2016
(73) Proprietor: Microchip Technology Incorporated, Chandler, AZ 85224-6199 (US)
(72) Inventor: KILZER, Kevin, Chandler, AZ 85225 (US); STEEDMAN, Sean, Phoenix, AZ 85048 (US)
(74) Representative: Grubert, Andreas
(86) International application number: PCT/US2014/021405
(87) International publication number: WO 2014/158995

(56) References cited:
- WO-A2-01/59571
- US-A1- 2004 039 963
- US-A1- 2007 061 524
- US-A1- 2009 300 402

## Description

The present disclosure relates to digital systems having a debug interface, in particular microcontrollers.

As embedded systems become smaller, there exists a growing need to minimize I/O signal consumption for communication between devices. This need has been addressed by Applicant by developing the so-called UNI/O bus, a low-cost, easy-to-implement solution requiring only a single I/O signal for communication. UNI/O bus-compatible devices can be used to enhance any application facing restrictions on available I/O. Such restrictions can possibly stem from connectors, board space, or from the master device itself.

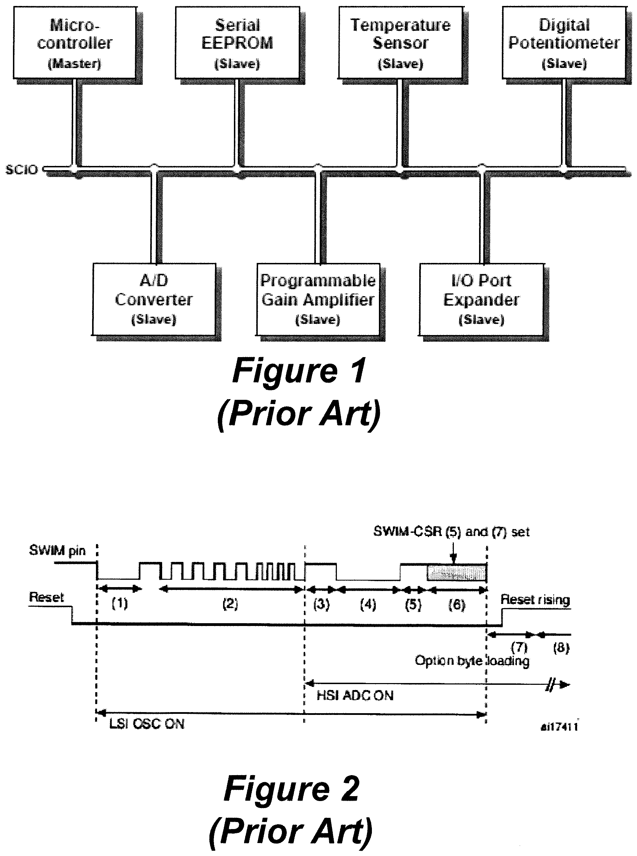

The UNI/O bus provides the definition for communication through a single I/O signal. It supports the use of multiple devices through a "bussed" system. Fig. 1 shows an example of a system using such a bus with a single signal bus line SCIO. One device is defined as the master (in Fig. 1 the microcontroller), and is responsible for initiating and coordinating all operations with the slave devices on the bus. Each slave acts as a peripheral to the master, and a slave can be designed for any number of purposes.

Figure 1 shows an example system with the microcontroller acting as the master, and other numerous devices attached to the bus as slave peripherals. It should however be noted that hat the master is not limited to being a microcontroller, but can be any device capable of processing the necessary I/O signal.

Data is embedded into the I/O stream through Manchester encoding. The bus is controlled by the master which determines the clock period, controls the bus access and initiates all operations, while all other devices act as slaves. Both master and slave devices can operate as transmitter or receiver, but the master determines which mode is active.

US Patent Application Publication US2007/061524 teaches the programming of a digital processor with a single connection. US Patent Application Publication US 2009/300402 discloses an embedded software testing using a single output. US Patent Application Publication US2004/0039963 discloses an asynchronous debug interface. The UNI/O bus supports operation from 10 kbps to 100 kbps (equivalent to 10 kHz to 100 kHz), and places no restrictions on voltage ranges, temperature ranges, or manufacturing processes. However, such a bus is usually not suited to provide for a debug interface for a microcontroller. Hence, there exists a need for an improved single wire bus capable of providing a debug interface, in particular for low pin count microcontroller devices. This and other objects can be achieved by a microcontroller and method as defined in the independent claims. Further enhancements are characterized in the dependent claims.
Fig. 1 shows a block diagram of a system using a single wire bus.
Fig. 2 shows a timing diagram of a single wire bus with associated reset signal line.
Fig. 3 shows a timing diagram according to an embodiment of an improved single wire bus.
Fig. 4 shows a detection unit of a microcontroller coupled with a single wire bus line.
Fig. 5 shows a block diagram of a microcontroller coupled with an external debugging or programming device coupled with a host PC.
Fig. 6 shows a timing diagram of a programming sequence according to various embodiments.
Fig. 7 shows a timing diagram of an exemplary command structure.
Figs. 8-11 show timing diagrams of various exemplary payload structures.

A true single "wire interface" uses only a single pin for signaling. However, a reference potential is of course still needed. Thus, all true single wire interface require a usually existing ground pin.

On low pin count devices, pins used for programming, debugging or communications protocols can often take up much of the available pin resources or create circuit interconnection problems. By providing a single communications module that can be used as a programming interface, debugging interface as well as a standard communications interface, the number of pins required to be used by the device is minimized. This greatly increases the flexibility and usage of a low pin microcontroller device by reducing the pin count required for in-circuit programming of such devices, especially the smaller devices, for example, devices with fewer pins.

Standard microcontroller, for example microcontrollers manufactured by Applicant require at least three pins for programming and in-circuit debugging. A first pin, MCLR is used to indicate to the device to switch into a programming mode by applying a programming voltage. Hence, this pin has associated logic that detects a high voltage applied to, wherein the term "high voltage" used in this application is to be understood as any voltage that exceeds the typical operating voltage of the device. Two more pins are used for a synchronous serial interface for data and clock signals. Once a high voltage is applied, the device may use the high voltage for programming its non-volatile memory and use the serial interface for communication with the external programming/debugging device. On an 8-pin device, for example a PIC12F device manufactured by Applicant, this interface uses basically 50% of the available input/output (I/O) pins as two pins are required for power supply. These low pin devices provide multiplex functions available through their peripheral devices on basically all available pins with the exception of the power supply pins. If all available pins are needed during a development of an application, an expensive special bond out chip version of that device must be used to connect to the programmer/debugger or emulation device. Even if all but one pin is used in an application, for debugging purposes such a so-called header device is required. Many applications of low-pin count devices however may have one pin that is free or in other words unused or not critical for debugging. Thus, according to various embodiments, such a pin can be used to provide for programming/debugging interface as will be explained in more detail below.

Many existing so-called "single-wire" interfaces actually require the use of more than just the single-wire pin to enter into the single-wire mode. For example, Fig. 2 shows a conventional interface of a single wire interface module (SWIM) that requires that on-chip circuitry be used to detect entry sequences that require two separate signals on two external pins.

According to various embodiment, with signaling exclusively on, for example, the Master Clear (MCLR) pin, the device can be designed that enters a 1-wire mode for programming and debugging. Commands and data are then transferred on the MCLR wire, and the device may be programmed or debugged.

According to various embodiments, advantage is taken of the high-voltage (HV) test entry logic in a microcontroller product, for example, microcontrollers manufactured by Applicant. By applying the HV signal in a pattern, an internal state can be established that allows the MCLR signal to be used for command and data entry. In this case, according to some embodiments, a proposed pattern is to alternate HV and GND levels 4 times within a few microseconds time frame 310, and the pattern will be recognized by internal timers to activate the UNIO interface. This is illustrated in Fig. 1. Other patterns may also be used (for example, 5 or more HV pulses, or a plurality of pulses with predefined pauses in-between), and these could activate alternative programming channels, like a UART (RS232), SPI or I2C. However, some of these type of interfaces may require more than just the single wire used for UNI/O and may thus be less beneficial.

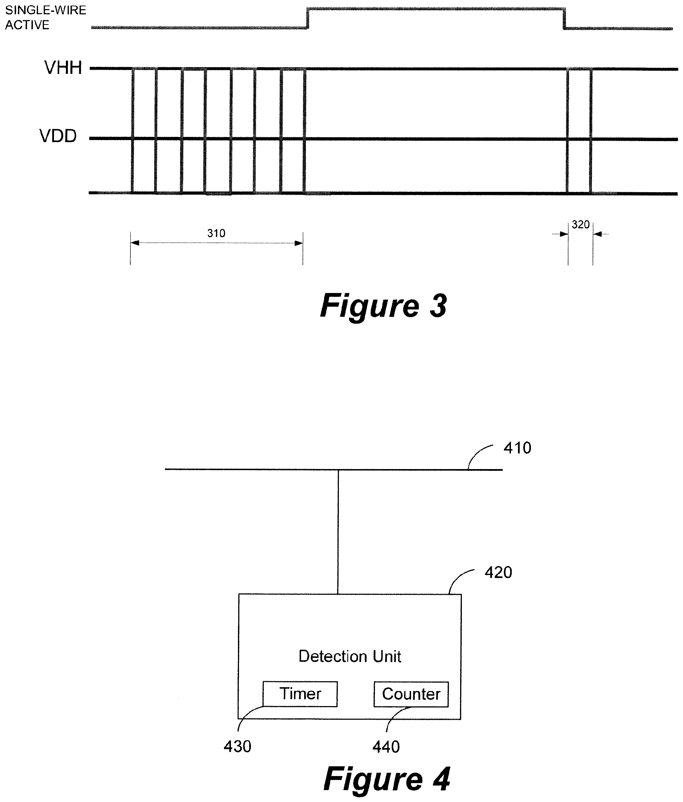

As shown in Fig. 3, a single wire interface or other serial interface may be active after exiting, for example, a high-voltage test mode for the n-th time. Fig. 3 shows the "normal" operating voltage VDD level and the VHH level which indicates a voltage that is generally higher than the "normal" operating voltage as discussed above. Different entry signals may activate different type of serial interfaces. For example a sequence which ends after a
- 4th time can be for single-wire interface
- 5th time can be for I²C programming interface
- 6th time can be for UART programming interface
- 7th time can be for SPI programming interface

As shown in Fig. 3, an Exit time frame 320 is going back into high-voltage test mode. Fig. 4 shows an exemplary detection unit 420 of a respective single wire interface coupled with the single wire 410. For purposes of detecting the distinct patterns one or more timer 430 may be present to define the entry time frame during which the initial pattern is to be transmitted. Such a timer 430 can be gated by a first incoming high voltage edge. A counter 440 may be implemented that is also triggered by the time window defined by the timer 430. The counter may then in one embodiment simply count the number of high voltage pulses submitted during the defined time frame.

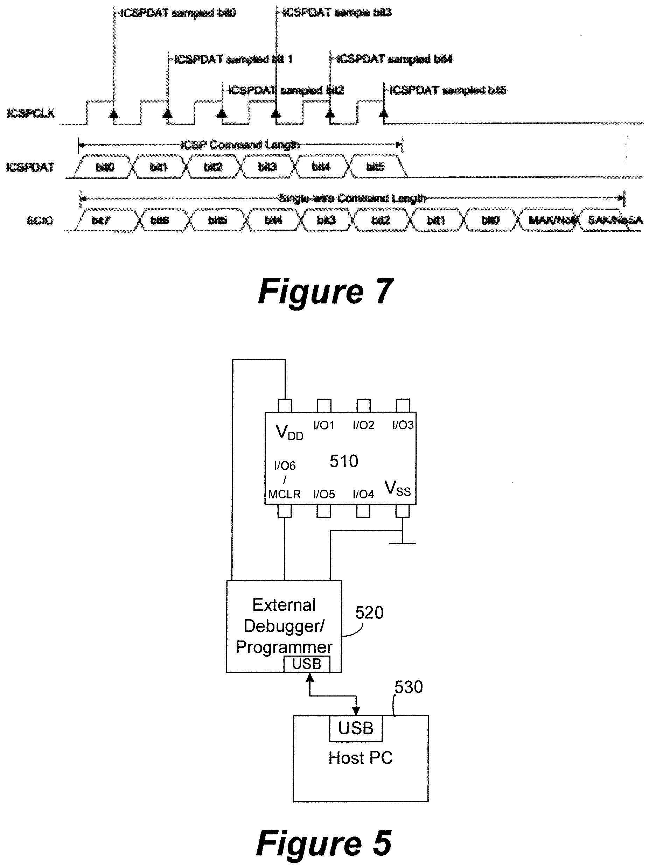

Fig. 5 shows an exemplary system with a microcontroller 510 coupled with an external debugger/programmer 520. The external debugger/programmer 520 comprises a USB interface through which the external debugger/programmer is coupled with a host personal computer or workstation 530. Microcontroller 510 in this example is a an eight pin device, for example an 8-bit microcontroller arranged in a eight pin DIL housing. However, other types of integrated circuit housing with more or less pins may be used. The microcontroller 510 comprises two power supply pins VDD and VSS and the remaining pins are general input/output pins I/O. Power may be provided by the external debugger/programmer 520 without the need of an external power supply as shown in Fig. 5. To this end, external debugger/programmer 520 uses the USB power to generate the necessary voltages for operating microcontroller 510. However, according to other embodiments, an external power supply may be used to power the microcontroller 510 and optionally the external debugger/programmer 520. As shown in Fig. 5, input/output pin I/O6 is multiplexed with the MCLR function. The other input/output pins may be multiplexed with other functions. The MCLR pin of microcontroller 510 is used as a single wire debugging/programming interface according to various embodiments.

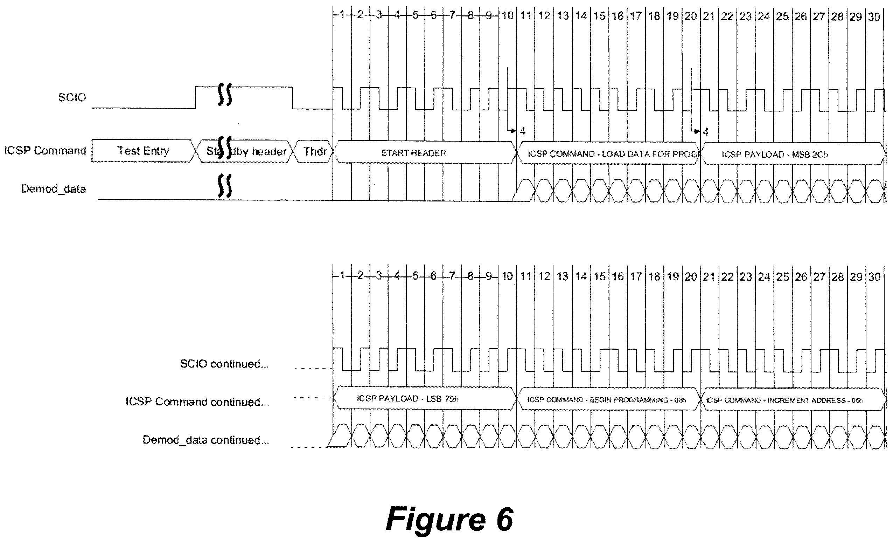

Fig. 6 shows a more detailed timing diagram of internal signals. As shown in Fig. 6, time slots may be used to decode the respective signals transmitted on the single wire bus, for example Manchester coded signals as shown in Fig. 6. Measures may be in place according to some embodiments, to prevent single-wire/user-mode/test-mode issues. For example, any test mode activity when entering high-voltage test mode may automatically disable the count for single-wire mode. A time-out after single wire mode detection can also be implemented to prevent unintended mode entry according to some embodiments.

The protocol used with a single wire interface, once the operating mode has been established can be for example the above mentioned UNI/O protocol. According to some embodiments, once the UNI/O control interface is activated, the MCLR signal operates with the normal GND/V_{DD} logic thresholds, and UNI/O-specified signaling is used to send and receive commands. The UNI/O protocol is defined by Microchip specification document DS-22076, and used for example in certain serial EEPROM products manufactured by Applicant. A typical UNI/O command sequence which can be used according to various embodiments is illustrated in FIG. 6. However, according to other embodiments other protocols may be used and the UNI/O protocol is merely applied as one embodiment.

Once the high voltage signal pattern has configured the MCLR pin for single-wire mode, the single wire interface provides the same command functionality as the in circuit serial programming (ICSP) mode, but uses the UNI/O peripheral state machine to receive and transmit the necessary data. Thus, the microcontroller can operate either with a standard ICSP interface using three pins or the via the single wire interface. In a default mode, the device may be preset to operate in the standard ICSP mode using three pins. Once a proper high voltage pattern has been received, the device operates using only a single pin with the UNI/O protocol.

The single-wire test command entry system uses the MCLR pin as the one SCIO pin for command entry. The SCIO pin is used as a bidirectional data input/output pin. When enabled for single-wire mode, the UNI/O peripheral and SCIO pin act as a UNI/O slave device. The external device must be in a master configuration. The SCIO pin may conform to the UNI/O standards, and so may require a special pad with weaker drive strength than a standard I/O pin according to an embodiment. Per the standard, the slave device may be overdriven by the master device to take control of the single-wire bus. However, as mentioned above, other protocols may be used and the present invention is not limited to the UNI/O protocol.

The UNI/O interface requires two preamble fields, "Standby" and "Start", as illustrated in Fig. 6. More operating details of the UNI/O interface can be found in the above mentioned UNI/O document.

All ICSP interface commands are available on the single-wire interface. The command codes can be padded, for example up to 8 bits, as shown in Table 1 according to an embodiment. According to an embodiment, command bits can be transmitted MSB first (instead of LSB first in the ICSP interface), as illustrated in Figure 7. However, other embodiments may use an LSB first order.

**Table 1**

| **Bit position** | **ICSP Data Position** | **Slngle-wire** | |
|---|---|---|---|
| | | **Data Position** | **Data Word** |
| **bit0** | **cmd[0]** | **cmd[0]** | **Word 0** |
| **bit1** | **cmd[1]** | **cmd[1]** | |
| **bit2** | **cmd[2]** | **cmd[2]** | |
| **bit3** | **cmd[3]** | **cmd[3]** | |
| **bit4** | **cmd[4]** | **cmd[4]** | |
| **bit5** | **cmd[5]** | **cmd[5]** | |
| **bit6** | **Not used** | **0** | |
| **bit7** | **Not used** | **0** | |

The UNI/O interface operates with a bi-directional acknowledge of the commands and data being sent over the bus using the MAK/SAK signal protocol. The host does not need to add the additional command decoding time required by the standard ICSP engine.

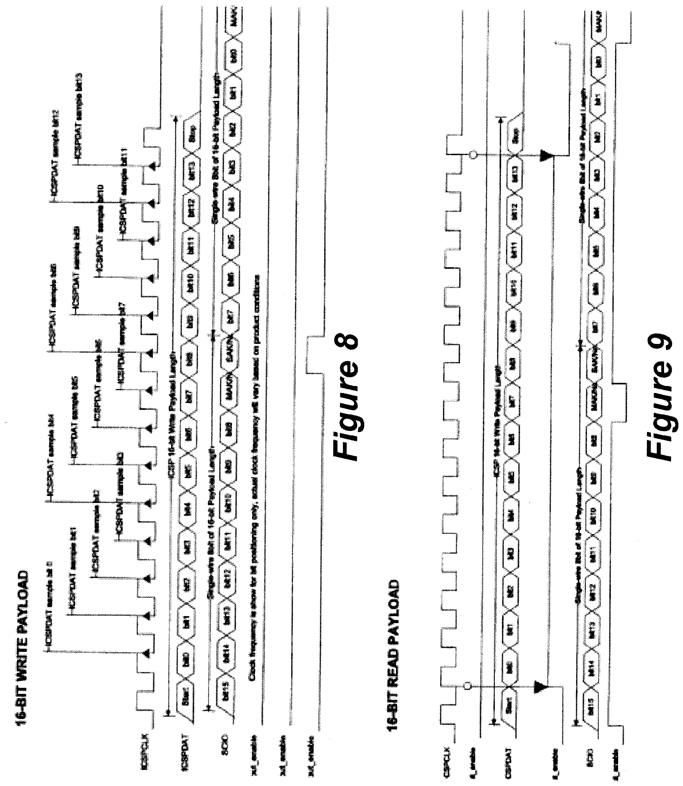

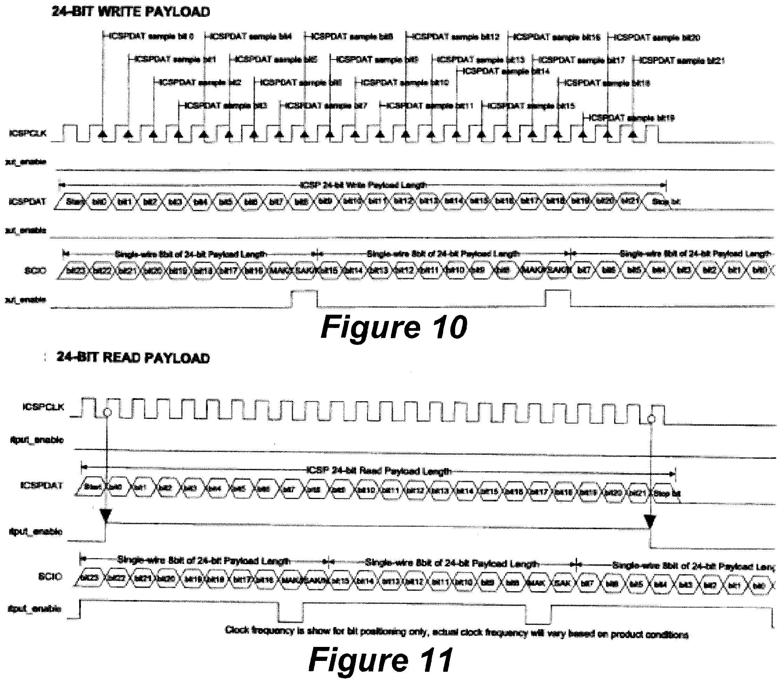

According to some embodiments, data sets associated with commands can be of various length, for example according to one embodiment either 16 or 24 bits in length, requiring two or three bytes over the UNI/O interface. As with command bytes, the data bytes may be transmitted MSB first according to an embodiment. According to some more specific embodiments, the 16-bit format is used for ICSP data payloads of 14 bits or less. The correspondence of data bits in the 16-bit payloads is shown in Table 2, Figures 8 and 9 . The 24-bit format is used for ICSP data payloads of 15 bits or more. The correspondence of data bits in the 24-bit payloads is shown in Table 3, Figures 10 and 11.

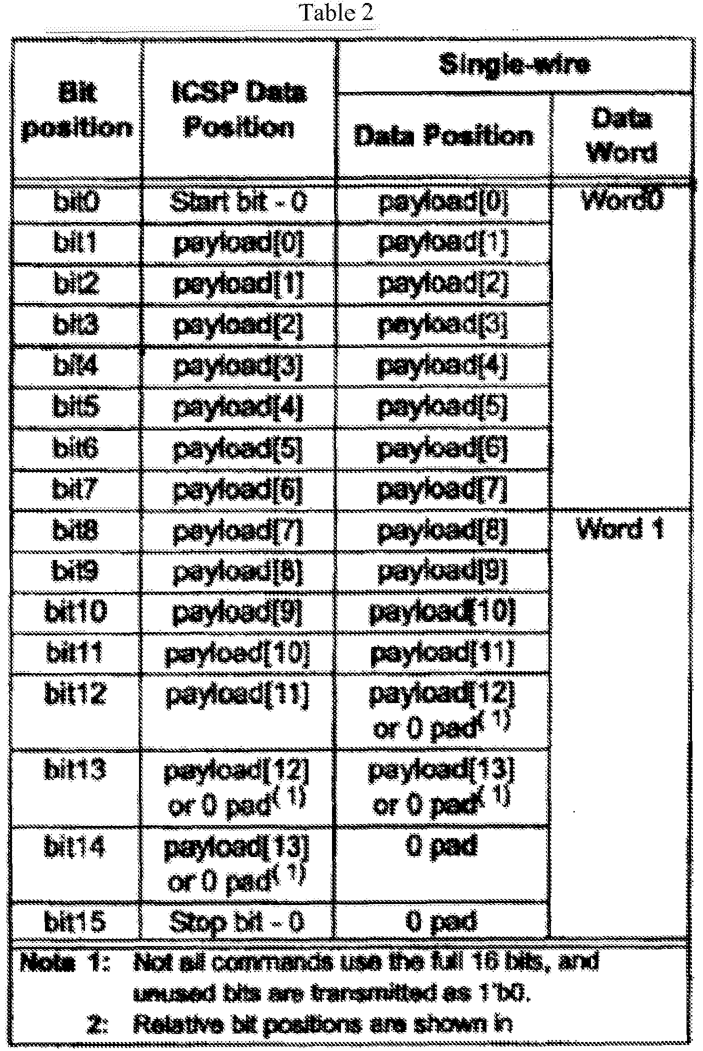

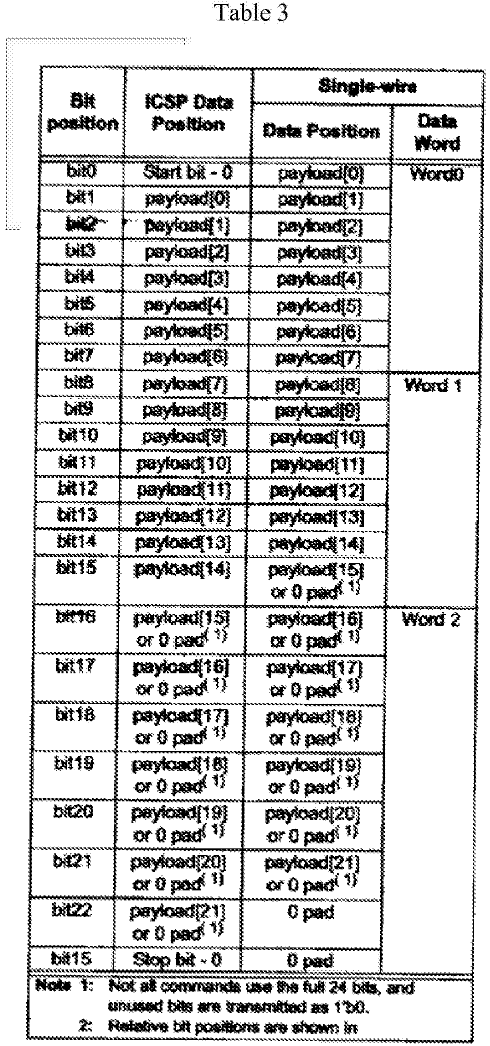

Once the single wire debug interface of a microcontroller has been activated by transmitting the proper entry pattern by an external debug device, Fig. 6 shows exemplary timing sequence for specific commands that can be used in a debug or programming session. On top of Fig. 6 during time slots 1-10, a start header is transmitted by the external debugger/programmer device 530 followed by a first command in slots 11-20, for example for loading data for the flash program memory of the microcontroller 510. This command may be followed by the actual data, wherein in this example an instruction word may consist of more than one byte. The top of Fig. 6 shows the MSB of an instruction word transmitted during slots 21-30. The bottom part of Fig. 5 shows the LSB of the instruction word for the programming of the flash memory during slots 1-10. Next follows a command during slots 11-20 from the ICSP device 510 which initiates the actual programming of the specific instruction into flash memory in microcontroller 510. Next during slots 21-30 another command for incrementing the program memory address may be transmitted. The sequence of commands and data transmitted in the timing diagram of Fig. 6 is merely an example and the actual protocol for transmitting information between a microcontroller and an external debugging/programming device may vary.

According to some embodiments, the single-wire interface mode remains in effect until the signal on the dedicated pin, e.g. the MCLR pin, is again raised to a high voltage (HV) level as shown in Fig. 3. Alternatively, according to some embodiments, a specific command applied to the one-wire bus (e.g. on the UNI/O bus) could be used to disable the respective logic and return to normal operation. Also, reasonable safeguards can be proposed in case the HV signal is inadvertently activated, including, for example according to one embodiment, an idle timer on the UNI/O signal, or recognition of activity on the legacy programming interface according to other embodiments; either condition will disable the one-wire interface.

According to various embodiments, the device, for example a microcontroller, may also include a self-programming capability. Such a functionality allows to generate a high programming voltage internally and does not require the external high voltage for programming purposes. Hence, applying the external high voltage is merely used for mode switching purposes.

Using a true "single wire" interface with a single-pin used to enter single-wire mode as well as conduct the required programming and debug transactions allows all other pins of, for example, a microcontroller to be used within the actual application. Using, for example, the UNI/O interface as the platform also supports hardware support for UNI/O which is not commonly available on microcontrollers. It further simplifies programming and debugging for microcontrollers as only a single-pin is required to drive the interface. This single pin can be for example the MCLR pin, which has a dedicated functionality, reducing its ability to be multiplexed with other functions as is done with all other device pins from a user perspective.

## Claims

1. A microcontroller comprising a housing having external pins (I/O, V_{DD}, V_{SS}) and an integrated debugging interface using only a single signal pin (MCLR), **characterized in that** the single signal pin (MCLR) is high voltage tolerant with respect to an operating supply voltage (V_{DD}) and wherein a signal sequence using a high voltage fed to the single signal pin (MCLR) activates a debugging or programming mode of the microcontroller (510).

2. The microcontroller according to claim 1, further comprising an internal high voltage generating device for providing an internal high programming voltage.

3. The microcontroller according to claim 1 or 2, wherein the microcontroller (510) is configured to communicate with an external debugging device (520) only via the single signal pin (MCLR).

4. The microcontroller according to one of the preceding claims, wherein the housing comprises less than n pins (I/O1-6, V_{DD}, V_{SS}), wherein n is an internal data bus width of the microcontroller (510).

5. The microcontroller according to claim 4, wherein n<=8.

6. A method for operating a microcontroller (510) having external pins (I/O, V_{DD}, Vss) and an integrated debugging interface, the method comprising the step of debugging or programming said microcontroller (510) using only a single signal pin (MCLR) of said external pins (I/O, V_{DD}, V_{SS}), **characterized in that** the single signal pin (MCLR) is high voltage tolerant with respect to an operating supply voltage and wherein a signal sequence using a high voltage fed to the single signal pin (MCLR) activates a debugging or programming mode of the microcontroller (510).

7. The microcontroller according to one of the preceding claims 1-5 or the method according to claim 6, wherein when in said debugging or programming mode, the single signal pin (MCLR) operates according to the UNI/O bus protocol.

8. The method according to claim 6 or 7, further comprising generating an internal high voltage for programming a non-volatile memory of the microcontroller (510).

9. The method according to one of the preceding claims 6-8, further comprising communicating by the microcontroller (510) with an external programming/debugging device (520) only via the single signal pin (MCLR).

10. The method according to one of the preceding claims 6-9, wherein a housing of the microcontroller (510) comprises less than n pins (I/O1-6, V_{DD}, Vss), wherein n is an internal data bus width of the microcontroller (510).

11. The method according to claim 10, wherein n<=8.

12. The microcontroller or method according to one of the preceding claims, wherein a plurality of different signal sequences (310) configures an operating mode of a communication interface of the microcontroller (510) including said signal pin (MCLR).

13. The microcontroller or method according to claim 12, wherein an operating mode of the communication interface is selected from the group consisting of a single wire interface, ICSP, UNI/O, I2C, UART, and SPI.

14. The microcontroller or method according to one of the preceding claims, wherein an exit frame (320) comprising a high voltage signal terminates the debugging or programming mode.

15. The microcontroller or method according to one of the preceding claims, wherein a command submitted through the single signal pin (MCLR) starts or terminates the debugging or programming mode.

## Patentansprüche

1. Mikrocontroller, der ein Gehäuse aufweist, das externe Anschlussstifte (I/O, V_{DD}, Vss) und eine integrierte Fehlerbeseitigungsschnittstelle aufweist, die nur einen einzelnen Signalanschluss (MCLR) verwendet, **dadurch gekennzeichnet, dass** der einzelne Signalanschluss (MCLR) in Bezug auf eine Betriebsversorgungsspannung (V_{DD}) hochspannungstolerant ist und wobei eine Signalsequenz, die eine Hochspannung verwendet und die in den einzelnen Signalanschluss (MCLR) eingespeist wird, einen Fehlerbeseitigungs- oder Programmiermodus des Mikrocontrollers (510) aktiviert.

2. Mikrocontroller gemäß Anspruch 1, der weiterhin eine interne Hochspannung erzeugende Anordnung zur Bereitstellung einer internen Programmierhochspannung aufweist.

3. Mikrocontroller gemäß Anspruch 1 oder 2, wobei der Mikrocontroller (510) konfiguriert ist, nur über den einzelnen Signalanschluss (MCLR) mit einer externen Fehlerbeseitigungsanordnung (520) zu kommunizieren.

4. Mikrocontroller gemäß einem der vorherigen Ansprüche, wobei das Gehäuse weniger als n Anschlussstifte (I/O/1-6, V_{DD}, V_{SS}) aufweist, wobei n einer internen Datenbusbreite des Mikrocontrollers (510) entspricht.

5. Mikrocontroller gemäß Anspruch 4, wobei n <= 8 ist.

6. Verfahren zum Betreiben eines Mikrocontrollers (510), der externe Anschlussstifte (I/O, V_{DD}, Vss) und eine integrierte Fehlerbeseitigungsschnittstelle aufweist, wobei das Verfahren unter Verwendung nur eines einzelnen Signalanschlusses (MCLR) der externen Anschlussstifte (I/O, V_{DD}, Vss) den Schritt der Fehlerbeseitigung oder Programmierung des Mikrocontroller (510) aufweist, **dadurch gekennzeichnet, dass** der einzelne Signalanschluss (MCLR) in Bezug auf eine Betriebsversorgungsspannung hochspannungstolerant ist und wobei eine Signalsequenz unter Verwendung einer in den einzelnen Signalanschluss (MCLR) eingespeisten Hochspannung einen Fehlerbeseitigungs- oder Programmiermodus des Mikrocontrollers (510) aktiviert.

7. Mikrocontroller gemäß einem der vorherigen Ansprüche 1 bis 5 oder das Verfahren gemäß Anspruch 6, wobei der einzelne Signalanschluss (MCLR) gemäß dem UNI/O Busprotokoll arbeitet, wenn der Fehlerbeseitigungs- oder Programmiermodus aktiviert ist.

8. Verfahren gemäß Anspruch 6 oder 7, das weiterhin Erzeugen einer internen Hochspannung zur Programmierung eines nicht-flüchtigen Speichers des Mikrocontrollers (510) aufweist.

9. Verfahren gemäß einem der vorherigen Ansprüche 6 bis 8, das weiterhin Kommunizieren des Mikrocontrollers (510) mit einer externen Programmierungs-/Fehlerbeseitigungsanordnung (520) nur über den einzelnen Signalanschluss (MCLR) aufweist.

10. Verfahren gemäß einem der vorherigen Ansprüche 6 bis 9, wobei ein Gehäuse des Mikrocontrollers (510) weniger als n Anschlussstifte (I/O1-6, V_{DD}, Vss) aufweist, wobei n einer internen Datenbusbreite des Mikrocontrollers (510) entspricht.

11. Verfahren gemäß Anspruch 10, wobei n <= 8 ist.

12. Mikrocontroller oder Verfahren gemäß einem der vorherigen Ansprüche, wobei eine Vielzahl von verschiedenen Signalsequenzen (310) einen Betriebsmodus einer Kommunikationsschnittstelle des Mikrocontrollers (510) einschließlich des Signalanschlusses (MCLR) konfiguriert.

13. Mikrocontroller oder Verfahren gemäß Anspruch 12, wobei ein Betriebsmodus der Kommunikationsschnittstelle ausgewählt wird aus der Gruppe bestehend aus Einzelleitungsschnittstelle, ICSP, UNI/O, I2C, UART und SPI.

14. Mikrocontroller oder Verfahren gemäß einem der vorherigen Ansprüche, wobei ein Endedatenübertragungsblock (320), der ein Hochspannungssignal aufweist, den Fehlerbeseitigungs- oder Programmiermodus beendet.

15. Mikrocontroller oder Verfahren gemäß einem der vorherigen Ansprüche, wobei ein durch den einzelnen Signalanschluss (MCLR) abgeschickter Befehl den Fehlerbeseitigungs-oder Programmiermodus startet oder beendet.

## Revendications

1. Microcontrôleur comprenant un boîtier ayant des broches externes (I/O, V_{DD},V_{SS}) et une interface de débogage intégrée utilisant seulement une simple broche de signal (MCLR), **caractérisé en ce que** la simple broche de signal (MCLR) est tolérante aux hautes tensions en ce qui concerne une tension d'alimentation de service (V_{DD}) et une séquence de signal utilisant une haute tension appliquée à la simple broche de signal (MCLR) activant un mode de débogage ou de programmation du microcontrôleur (510).

2. Microcontrôleur selon la revendication 1, comprenant en outre un dispositif générateur de haute tension interne pour fournir une haute tension de programmation interne.

3. Microcontrôleur selon la revendication 1 ou 2, dans lequel le microcontrôleur (510) est conçu pour communiquer avec un dispositif de débogage externe (520) uniquement par l'intermédiaire de la simple broche de signal (MCLR).

4. Microcontrôleur selon l'une des revendications précédentes, dans lequel le boîtier comprend moins de n broches (I/O1-6, V_{DD}, Vss), n étant une largeur de bus de données interne du microcontrôleur (510).

5. Microcontrôleur selon la revendication 4, dans lequel n≤8.

6. Procédé de commande d'un microcontrôleur (510) ayant des broches externes (I/O, V_{DD}, Vss) et une interface de débogage intégrée, ce procédé comprenant l'étape de débogage ou de programmation dudit microcontrôleur (510) uniquement à l'aide d'une simple broche de signal (MCLR) desdites brioches externes (I/O, V_{DD}, Vss), **caractérisé en ce que** la simple broche de signal (MCLR) est tolérante aux hautes tensions en ce qui concerne une tension d'alimentation de service et une séquence de signal utilisant une haute tension appliquée à la simple broche de signal (MCLR) activant un mode de débogage ou de programmation du microcontrôleur (510).

7. Microcontrôleur selon l'une des revendications précédentes 1 à 5, ou procédé selon la revendication 6, dans lequel, dans le mode de débogage ou de programmation, la simple broche de signal (MCLR) fonctionne selon le protocole de bus UNI/O.

8. Procédé selon la revendication 6 ou 7, comprenant en outre la génération d'une haute tension interne pour la programmation d'une mémoire non volatile du microcontrôleur (510).

9. Procédé selon l'une des revendications 6 à 8, comprenant en outre la communication par le microcontrôleur (510) avec un dispositif externe de programmation/débogage (520) uniquement par l'intermédiaire de la simple broche de signal (MCLR).

10. Procédé selon l'une des revendications 6 à 9, dans lequel un boîtier du microcontrôleur (510) comprend moins de n broches (I/O1-6, V_{DD}, Vss), n étant une largeur de bus de données interne du microcontrôleur (510).

11. Procédé selon la revendication 10, dans lequel n≤8.

12. Microcontrôleur ou procédé selon l'une des revendications précédentes, dans lequel une pluralité de séquence de signaux différentes (310) configure un mode de fonctionnement d'une interface de communication du microcontrôleur (510) comprenant ladite simple broche de signal (MCLR).

13. Microcontrôleur ou procédé selon la revendication 12, dans lequel un mode de fonctionnement de l'interface de communication est sélectionnée dans le groupe constitué d'une simple interface filaire, ICSP, UNI/O, PC, UART et SPI.

14. Microcontrôleur ou procédé selon l'une des revendications précédentes, dans lequel un cadre de sortie (320) comprenant un signal à haute tension termine le mode de débogage ou de programmation.

15. Microcontrôleur ou procédé selon l'une des revendications précédentes, dans lequel une commande soumise par l'intermédiaire de la simple broche de signal (MCLR) commence ou termine le mode de débogage ou de programmation.
